# EUROPEAN PATENT APPLICATION

(11) **EP 4 672 633 A1**
(43) Date of publication of application: **31.12.2025**
(21) Application number: 24778120.6
(22) Date of filing: 28.03.2024
(51) Int. Cl.: H04B 7/185

(54) **SATELLITE COMMUNICATION METHOD AND APPARATUS**

(30) Priority: 30.03.2023 CN 202310361968
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); WANG, Jun, Shenzhen, Guangdong 518129 (CN)
(74) Representative: Grünecker Patent- und Rechtsanwälte PartG mbB
(86) International application number: PCT/CN2024/084334
(87) International publication number: WO 2024/199334

(57) **Abstract**

A satellite communication method and an apparatus are provided, and the method may be applied to the field of satellite communication. The method includes: GNSS first validity duration of a first communication apparatus is determined; a second communication apparatus sends a TAC within the GNSS first validity duration; and when receiving the TAC from the second communication apparatus within the GNSS first validity duration, the first communication apparatus determines GNSS second validity duration based on validity duration of the TAC and the GNSS first validity duration. The method can effectively increase communication duration of a terminal device.

## Description

This application claims priority to Chinese Patent Application No. 202310361968.6, filed with the China National Intellectual Property Administration on March 30, 2023, and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Compared with terrestrial communication, satellite communication has its unique advantages. For example, satellite communication can provide a wider coverage area, and satellite base stations are not vulnerable to natural disasters or external forces. If satellite communication is introduced to future communication, communication services can be provided for some areas, such as oceans and forests, that cannot be covered by terrestrial communication networks; reliability of the communication can be enhanced, for example, better communication services are ensured for airplanes, trains, and users on these transportation vehicles; and more data transmission resources are provided for the communication, to improve a network rate. Therefore, supporting both terrestrial communication and satellite communication is an inevitable trend of future communication, and is greatly beneficial in terms of wide coverage, reliability, multi-connectivity, a high throughput, and the like.

Currently, satellite communication has been introduced into a 3rd generation partnership project (3rd generation partnership project, 3GPP) standard, and is used as a communication scenario of 5th generation (5th generation, 5G) communication and referred to as a non-terrestrial network (non-terrestrial network, NTN). The NTN not only supports various 5G terminals, but also supports internet of things (internet of things, IoT) terminals, and the like. Satellite communication is most significantly characterized by high mobility and a long communication delay. Therefore, compared with terrestrial communication, in satellite communication, a terminal further needs to implement synchronization based on information such as a global navigation satellite system (Global Navigation Satellite System, GNSS) or an ephemeris on the basis of uplink synchronization. For example, after reporting GNSS information, the terminal may remain in a connected state within specific validity duration, and after the GNSS expires, the terminal enters an idle state.

However, in the foregoing method, the terminal continuously initiates random access to enter the connected state and exits the connected state. Consequently, the terminal cannot perform continuous communication for a long time.

### SUMMARY

Embodiments of this application provide a satellite communication method and an apparatus, to effectively increase communication duration of a terminal device.

According to a first aspect, an embodiment of this application provides a satellite communication method. The method is applied to a first communication apparatus, and the first communication apparatus may be a terminal device, a chip in a terminal device, or a functional module in a terminal device. The method includes: determining global navigation satellite system GNSS first validity duration of the first communication apparatus; receiving a timing advance command (timing advance command, TAC) from a second communication apparatus within the GNSS first validity duration; and determining GNSS second validity duration, where the GNSS second validity duration is determined based on the GNSS first validity duration and validity duration of the TAC, and the GNSS second validity duration is longer than the GNSS first validity duration.

In this embodiment of this application, the terminal device may implement uplink synchronization based on GNSS information and the TAC. Therefore, on the basis that the terminal device implements uplink synchronization, communication duration of the terminal device can be effectively increased (in other words, duration in which the terminal device is in a connected state is increased) by extending validity duration of the GNSS information (that is, the GNSS second validity duration is longer than the GNSS first validity duration), so that the terminal device can implement long-time communication. Compared with a solution in which the terminal device enters an idle state after the GNSS information expires (that is, validity duration of the GNSS information is not extended), and then initiates random access again to enter the connected state and exit the connected state (for example, the GNSS information expires), this embodiment of this application can further effectively avoid signaling overheads generated when the terminal device continuously enters and exits the connected state, so that signaling overheads is reduced and power consumption of the terminal device is reduced.

With reference to the first aspect, in a possible implementation, the method further includes:
entering the idle state when no information for triggering GNSS measurement is received from the second communication apparatus within the second validity duration; or starting a timer when no information for triggering GNSS measurement is received from the second communication apparatus within the second validity duration, and continuing to communicate with the second communication apparatus when the GNSS measurement is completed within timing duration of the timer, where start time of the timer is an end moment of the GNSS second validity duration.

In this embodiment of this application, when the GNSS second validity duration ends and no information for triggering the GNSS measurement is received, the terminal device may further autonomously start the timer to perform GNSS measurement. When the GNSS measurement is completed within the timing duration of the timer, the terminal device may continue to remain in the connected state. Therefore, a quantity of disconnections of the terminal device is further reduced, and duration of communication between the terminal device and a network device is further improved.

According to a second aspect, an embodiment of this application provides a satellite communication method. The method is applied to a second communication apparatus, and the second communication apparatus is a network device, a chip in a network device, or a functional module in a network device. The method includes: determining global navigation satellite system GNSS first validity duration of a first communication apparatus; sending a timing advance command TAC to the first communication apparatus within the GNSS first validity duration; and determining GNSS second validity duration, where the GNSS second validity duration is determined based on the GNSS first validity duration and validity duration of the TAC, and the GNSS second validity duration is longer than the GNSS first validity duration.

With reference to the first aspect or the second aspect, in a possible implementation, an end moment of the validity duration of the TAC is later than an end moment of the GNSS first validity duration.

In this embodiment of this application, if the end moment of the TAC is after the end moment of the GNSS first validity duration, the GNSS first validity duration may be extended. This not only effectively increases communication duration of the terminal device, but also enables the terminal device to perform uplink timing advance adjustment based on the TAC, so that uplink synchronization within the validity duration of the TAC is more accurate. Both the communication duration of the terminal device and accuracy of the uplink synchronization of the terminal device can be considered.

With reference to the first aspect or the second aspect, in a possible implementation, the GNSS first validity duration is GNSS original validity duration, or the GNSS first validity duration is validity duration updated based on the GNSS second validity duration.

With reference to the first aspect or the second aspect, in a possible implementation, when the GNSS first validity duration is the validity duration updated based on the GNSS second validity duration, a difference between the GNSS second validity duration and the GNSS first validity duration is determined based on validity duration of one TAC, and the method further includes: updating the GNSS second validity duration to the new GNSS first validity duration.

With reference to the first aspect or the second aspect, in a possible implementation, a difference between the GNSS second validity duration and the GNSS original validity duration is determined based on validity duration of N TACs, and N is a positive integer.

With reference to the first aspect or the second aspect, in a possible implementation, that the difference between the GNSS second validity duration and the GNSS original validity duration is determined based on the validity duration of the N TACs includes: The difference between the GNSS second validity duration and the GNSS original validity duration is determined based on the validity duration of the N TACs and maximum extension duration.

With reference to the first aspect or the second aspect, in a possible implementation, that the difference between the GNSS second validity duration and the GNSS original validity duration is determined based on the validity duration of the N TACs includes: The difference between the GNSS second validity duration and the GNSS original validity duration is determined based on the validity duration of the N TACs and a maximum quantity.

With reference to the first aspect or the second aspect, in a possible implementation, that the difference between the GNSS second validity duration and the GNSS original validity duration is determined based on the validity duration of the N TACs includes: The difference between the GNSS second validity duration and the GNSS original validity duration is shorter than the validity duration of the N TACs; or the difference between the GNSS second validity duration and the GNSS original validity duration is equal to the validity duration of the N TACs.

According to a third aspect, an embodiment of this application provides a first communication apparatus, configured to perform the method in any one of the first aspect or the possible implementations of the first aspect. The first communication apparatus includes units that perform the method in any one of the first aspect or the possible implementations of the first aspect.

For example, the first communication apparatus may be a terminal device or a chip, and the chip may be used in the terminal device.

According to a fourth aspect, an embodiment of this application provides a second communication apparatus, configured to perform the method in any one of the second aspect or the possible implementations of the second aspect. The second communication apparatus includes units that perform the method in any one of the second aspect or the possible implementations of the second aspect.

For example, the second communication apparatus may be a network device or a chip, and the chip may be used in the network device.

According to a fifth aspect, an embodiment of this application provides a first communication apparatus. The first communication apparatus includes a processor, configured to perform the method shown in any one of the first aspect or the possible implementations of the first aspect. Alternatively, the processor is configured to execute a program stored in a memory. When the program is executed, the method shown in any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive a signal or send a signal. For example, the transceiver may be further configured to receive a TAC or information for triggering GNSS measurement (which may be referred to as trigger information for short). For example, the transceiver may be further configured to send information about GNSS original validity duration. For example, the first communication apparatus may be a terminal device.

According to a sixth aspect, an embodiment of this application provides a second communication apparatus. The second communication apparatus includes a processor, configured to perform the method shown in any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated together. For example, the second communication apparatus may be a chip. For example, the memory may be configured to store GNSS original validity duration, a maximum quantity, or maximum extension duration.

In a possible implementation, the second communication apparatus further includes a transceiver. The transceiver is configured to receive a signal or send a signal. For example, the transceiver may be configured to send a TAC or trigger information. For example, the transceiver may be further configured to receive information about the GNSS original validity duration. For example, the second communication apparatus may be a network device.

According to a seventh aspect, an embodiment of this application provides a first communication apparatus. The first communication apparatus includes a logic circuit and an interface. The logic circuit is coupled to the interface, the interface is configured to input and/or output information, and the logic circuit is configured to perform the method according to any one of the first aspect or the possible implementations. That the interface is configured to input information may include that the interface is configured to input a TAC or trigger information, and that the interface is configured to output information may include that the interface is configured to output information about GNSS original validity duration, and the like.

For example, the logic circuit is configured to: determine GNSS first validity duration; and determine GNSS second validity duration based on the TAC input by the interface and the GNSS first validity duration.

For example, the logic circuit is further configured to update the GNSS second validity duration to the new GNSS first validity duration.

For example, the logic circuit is further configured to: when no trigger information is received within the GNSS second validity duration, control a terminal device to enter an idle state; or start a timer, and when GNSS measurement is completed within timing duration of the timer, continue to communicate with a second communication apparatus through the interface.

According to an eighth aspect, an embodiment of this application provides a second communication apparatus. The second communication apparatus includes a logic circuit and an interface. The logic circuit is coupled to the interface, the interface is configured to input and/or output information, and the logic circuit is configured to perform the method according to any one of the second aspect or the possible implementations. That the interface is configured to input information includes that the interface is configured to input information about GNSS original validity duration, and that the interface is configured to output information includes that the interface is configured to output a TAC or trigger information.

For example, the logic circuit is configured to: determine GNSS first validity duration; and determine GNSS second validity duration based on the TAC output by the interface and the GNSS first validity duration.

For example, the logic circuit is further configured to update the GNSS second validity duration to the new GNSS first validity duration.

According to a ninth aspect, an embodiment of this application provides a computer-readable storage medium. The computer-readable storage medium is configured to store a computer program, and when the computer program is run on a computer, the method shown in any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method shown in any one of the second aspect or the possible implementations of the second aspect is performed.

According to an eleventh aspect, an embodiment of this application provides a computer program product. The computer program product includes a computer program or computer code, and when the computer program product runs on a computer, the method shown in any one of the first aspect or the possible implementations of the first aspect is performed.

According to a twelfth aspect, an embodiment of this application provides a computer program product. The computer program product includes a computer program or computer code, and when the computer program product runs on a computer, the method shown in any one of the second aspect or the possible implementations of the second aspect is performed.

According to a thirteenth aspect, an embodiment of this application provides a computer program. When the computer program is run on a computer, the method shown in any one of the first aspect or the possible implementations of the first aspect is performed.

According to a fourteenth aspect, an embodiment of this application provides a computer program. When the computer program is run on a computer, the method shown in any one of the second aspect or the possible implementations of the second aspect is performed.

According to a fifteenth aspect, an embodiment of this application provides a communication system. The communication system includes a first communication apparatus and a second communication apparatus. The first communication apparatus is configured to perform the method shown in any one of the first aspect or the possible implementations of the first aspect, and the second communication apparatus is configured to perform the method shown in any one of the second aspect or the possible implementations of the second aspect.

### BRIEF DESCRIPTION OF DRAWINGS

FIG. 1 is a diagram of an architecture of a communication system according to an embodiment of this application;
FIG. 2a is a diagram of a satellite communication system in a transparent transmission scenario according to an embodiment of this application;
FIG. 2b is a diagram of a satellite communication system in a regeneration scenario according to an embodiment of this application;
FIG. 2c is a diagram of a satellite communication system in a regeneration scenario according to an embodiment of this application;
FIG. 3 is a schematic flowchart of a satellite communication method according to an embodiment of this application;
FIG. 4a is a diagram of a scenario of a satellite communication method according to an embodiment of this application;
FIG. 4b is a diagram of a scenario of a satellite communication method according to an embodiment of this application;
FIG. 5a is a diagram of a relationship between GNSS first validity duration and GNSS second validity duration according to an embodiment of this application;
FIG. 5b is a diagram of a relationship between GNSS first validity duration and GNSS second validity duration according to an embodiment of this application;
FIG. 5c is a diagram of a relationship between GNSS first validity duration and GNSS second validity duration according to an embodiment of this application;
FIG. 6a is a diagram of a relationship between GNSS original validity duration and GNSS second validity duration according to an embodiment of this application;
FIG. 6b is a diagram of a relationship between GNSS original validity duration and GNSS second validity duration according to an embodiment of this application;
FIG. 6c is a diagram of a relationship between GNSS original validity duration and GNSS second validity duration according to an embodiment of this application;
FIG. 6d is a diagram of a relationship between GNSS original validity duration and GNSS second validity duration according to an embodiment of this application;
FIG. 7a is a diagram of a relationship between GNSS original validity duration and GNSS second validity duration according to an embodiment of this application;
FIG. 7b is a diagram of a relationship between GNSS original validity duration and GNSS second validity duration according to an embodiment of this application;
FIG. 7c is a diagram of a relationship between GNSS original validity duration and GNSS second validity duration according to an embodiment of this application;
FIG. 7d is a diagram of a relationship between GNSS original validity duration and GNSS second validity duration according to an embodiment of this application;
FIG. 8a is a schematic flowchart of a satellite communication method according to an embodiment of this application;
FIG. 8b is a diagram of a relationship between GNSS original validity duration and GNSS second validity duration according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

For ease of understanding of technical solutions in this application, the following further describes this application with reference to accompanying drawings.

The terms "first", "second", and the like in the specification, claims, and accompanying drawings of this application are merely used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects, which indicates that three relationships may exist. For example, "A and/or B" may indicate the following three cases: only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may represent a, b, c, "a and b", "a and c", "b and c", or "a, b, and c".

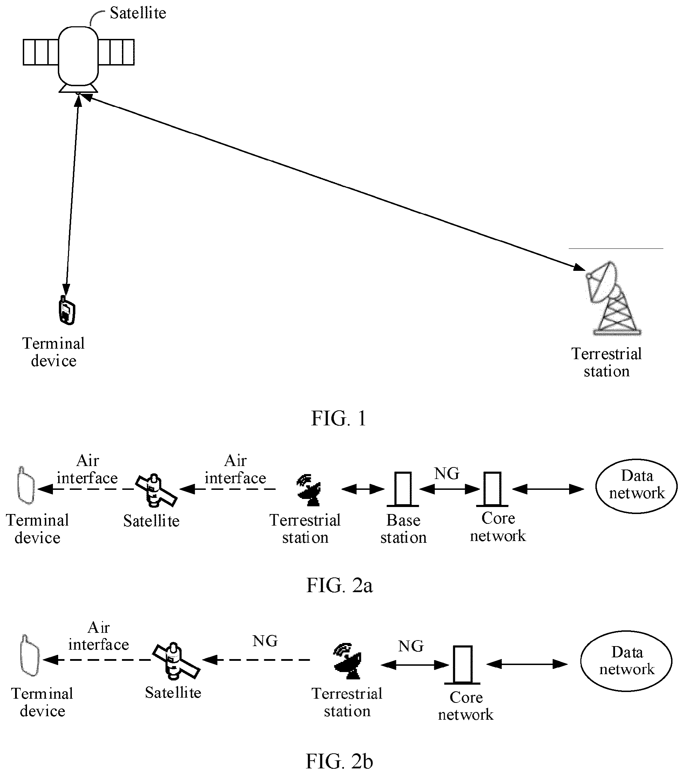

The method provided in embodiments of this application may be applied to a non-terrestrial network (non-terrestrial network, NTN) communication system. As shown in FIG. 1, the communication system may include a terminal device, a satellite, and a terrestrial station (which may also be referred to as a gateway station or a signal gateway station). It may be understood that FIG. 1 shows only one satellite and one terrestrial station. In actual use, an architecture with a plurality of satellites and/or a plurality of terrestrial stations may be used as required. Each satellite may provide a service for one or more terminal devices, each satellite may correspond to one or more terrestrial stations, each terrestrial station may correspond to one or more satellites, or the like. This is not specifically limited in embodiments of this application.

The terminal device is an apparatus having a wireless sending and receiving function. The terminal device may communicate with an access network device (or referred to as an access device) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor device, an outdoor device, a handheld device, or a vehicle-mounted device; or may be deployed on water (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th generation (5th generation, 5G) network or a future network, or the like that has a wireless communication function. This is not limited in embodiments of this application. For example, the terminal devices may further communicate with each other by using device-to-device (device-to-device, D2D) or machine-to-machine (machine-to-machine, M2M) communication. The terminal device shown in embodiments of this application may alternatively be a device in the internet of things (internet of things, IoT). This IoT network may include, for example, the internet of vehicles. Communication manners in an internet of vehicles system are collectively referred to as vehicle to X (vehicle to X, V2X, where X can stand for anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The terrestrial station may be configured to connect a satellite and a base station, or connect a satellite and a core network. The satellite may provide a radio access service for the terminal device, schedule a radio resource to an accessing terminal device, and provide a reliable radio transmission protocol, data encryption protocol, and the like. In an example, the satellite may use an artificial earth satellite, a high-altitude aircraft, and the like as base stations for wireless communication, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal device.

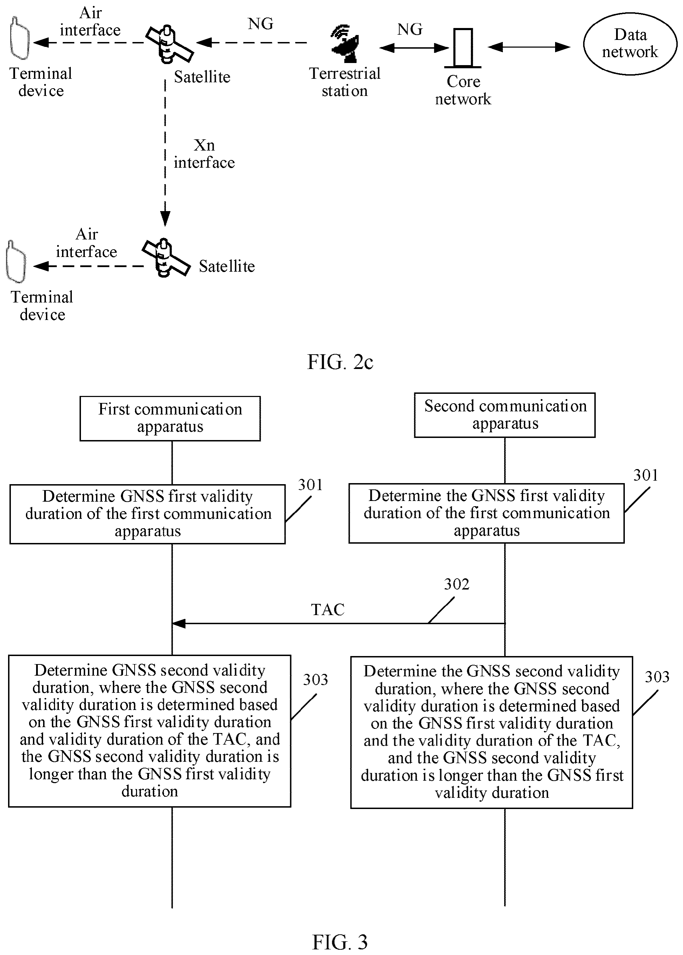

Therefore, in some implementations of this application, for example, in a satellite transparent transmission scenario, a network device may be a base station (which may also be referred to as a terrestrial base station) shown in FIG. 1. FIG. 2a is a diagram of a satellite communication system in a transparent transmission scenario according to an embodiment of this application. For example, a terminal device may access a network through air interfaces (where the air interfaces may be various types of air interfaces, for example, 5G air interfaces), and a network device may be deployed on a terrestrial base station. The satellite is connected to a terrestrial station through a radio link. The terrestrial station and the terrestrial base station are connected to a core network in a wired or wireless manner. A radio link may exist between satellites. In the system shown in FIG. 2a, the satellites may have transparent transmission and forwarding functions. In some other implementations of this application, for example, in a satellite regeneration scenario, the network device may be the satellite shown in FIG. 1. FIG. 2b is a diagram of a satellite communication system in a regeneration scenario according to an embodiment of this application. For example, a terminal device may access a network through air interfaces (where the air interfaces may be various types of air interfaces, for example, 5G air interfaces), and network devices may be deployed on satellites (for example, in a regeneration mode of the satellites). For example, base stations or some functions of the base stations are deployed on the satellites, and signaling exchange and user data transmission between the base stations may be completed between the satellites, as shown in FIG. 2c.

For example, network elements and interfaces between the network elements in FIG. 2a to FIG. 2c may be shown as follows.

The terminal device may access a satellite network through an air interface and initiate a service like a call or internet access. The base station may provide a radio access service, schedule a radio resource to the accessing terminal device, and provide a reliable radio transmission protocol, data encryption protocol, and the like. The terrestrial station may be configured to forward signaling and service data between the satellite and the core network. The core network may be used for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), a user plane function (user plane function, UPF), and the like. For example, the AMF may be responsible for user access management, security authentication, mobility management, and the like. The UPF may be configured to manage user plane data transmission, traffic statistics collection, and the like. The air interface shown in FIG. 2a to FIG. 2c may be understood as a radio link between the terminal and the base station, or a radio link between the satellite and the terrestrial station. An Xn interface may be understood as an interface between the base stations, and is mainly used for signaling exchange such as a handover. An NG interface may be used as an interface between the base station and the core network, and is used to exchange signaling such as non-access (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (non-geostationary earth orbit, NGEO), a high-altitude communication platform (high-altitude platform station, HAPS), or the like. A specific type of the satellite is not limited in embodiments of this application.

In some deployments of the network device, the network device may include a central unit (central unit, CU) and a distributed unit (distributed unit, DU). In some other deployments of the network device, the CU may be further divided into a CU-control plane (control plane, CP) and a CU-user plane (user plane, UP). In still some other deployments of the network device, the network device may alternatively be an open radio access network (open radio access network, ORAN) architecture or the like. A specific deployment manner of the network device is not limited in embodiments of this application. For example, when the network device is of the ORAN architecture, the network device shown in embodiments of this application may be an access network device in an ORAN, a module in the access network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. The deployment manner of the network device listed herein is merely an example. With evolution of standard technologies, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions and the network architecture provided in embodiments of this application are also applicable to similar technical problems.

Currently, there is a short-time connection communication method. In the method, a terminal device initiates random access, and exits a connected state after sending uplink data. In this process, GNSS information obtained by the terminal device before the random access is always valid. In other words, the GNSS information is always valid before the terminal device exits the RRC connected state. Even if the terminal device moves and a GNSS deviation is caused by the movement, a synchronization requirement can also be met. For an IoT terminal device, because an IoT service is characterized by periodic transmission of short packets, the short-time connection communication method may be effectively applicable to the terminal device characterized by periodic transmission of short packets.

However, the GNSS information obtained by the terminal device in the foregoing method has specific validity duration (validity duration). After the GNSS information expires, the terminal device cannot continue to ensure a connection, and needs to exit the connected state and enter an idle state. The terminal device performs random access for a plurality of times to enter the connected state and exits the connected state, resulting in excessively high signaling overheads. Alternatively, when the terminal device is in the connected state for a long time, the GNSS information expires. Therefore, the terminal device needs to re-obtain GNSS information. However, when the terminal device re-obtains the GNSS information, communication and GNSS measurement cannot be performed simultaneously. For example, the terminal device may fail to perform communication when performing GNSS measurement.

For example, the validity duration may be duration determined by the terminal device based on information such as a movement speed of the terminal device, a relative location relationship between the terminal device and a satellite (for example, in a central area or an edge area covered by the satellite), or a relative speed between the terminal device and a satellite, and then the terminal device reports the validity duration to a network device. However, when determining the validity duration, the terminal device generally determines the validity duration in a conservative manner. Consequently, the validity duration is relatively short, and cannot support long-time continuous communication of the terminal device. Alternatively, when determining the validity duration based on the information such as the movement speed, the terminal device does not consider communication duration required by the terminal device. Consequently, the validity duration is shorter than the communication duration, and cannot support long-time continuous communication.

In view of this, embodiments of this application provide a satellite communication method and an apparatus. On the basis that the terminal device implements uplink synchronization, communication duration of the terminal device can be increased (in other words, duration in which the terminal device is in a connected state is increased), so that the terminal device can implement long-time communication, and signaling overheads generated when the terminal device continuously enters and exits the connected state can be avoided, thereby reducing the signaling overheads.

In a satellite communication method shown below (as shown in FIG. 3), a first communication apparatus may be a terminal device, a chip disposed in a terminal device, or a functional module in a terminal device, and a second communication apparatus may be a network device, a chip disposed in a network device, or a functional module in a network device. As shown above, the network device may include an access network device, a module, or the like in an O-RAN architecture. For specific descriptions of the terminal device and the network device, refer to FIG. 1 and FIG. 2a to FIG. 2c. Details are not described herein again. For ease of description, the following may use the terminal device and the network device as an example for description in specific examples, but should not be construed as a limitation on embodiments of this application.

FIG. 3 is a schematic flowchart of a satellite communication method according to an embodiment of this application. As shown in FIG. 3, the method includes the following steps.

301: A first communication apparatus determines GNSS first validity duration of the first communication apparatus, and a second communication apparatus determines the GNSS first validity duration of the first communication apparatus.

Both the GNSS first validity duration and GNSS second validity duration may indicate validity duration of GNSS information of the first communication apparatus. For example, the first communication apparatus obtains validity duration of same GNSS information by performing same GNSS measurement. However, the GNSS second validity duration is longer than the GNSS first validity duration. For example, the GNSS second validity duration may be duration extended based on the GNSS first validity duration. For another example, a start moment of the GNSS second validity duration is equal to a start moment of the GNSS first validity duration. During specific implementation, validity duration of the GNSS information may not be distinguished by name in a protocol. For example, the GNSS first validity duration and the GNSS second validity duration may be collectively referred to as GNSS validity duration, a GNSS validity period, or the like. For example, GNSS measurement is a process of obtaining geographical location information by performing positioning based on a signal of a navigation satellite. GNSS information may indicate information related to a geographical location of a terminal device, for example, coordinates X, Y, and Z, or information such as a longitude, a latitude, and a height.

The GNSS first validity duration may be described in two ways:

### A. The GNSS first validity duration is GNSS original validity duration.

The GNSS original validity duration may be understood as GNSS validity duration reported by the terminal device to a network device, GNSS validity duration determined by the terminal device based on information such as a speed of the terminal device, or validity duration that is not extended based on validity duration of a TAC. For example, the method shown in FIG. 3 may further include: The terminal device sends information carrying the GNSS original validity duration, and correspondingly, the network device receives the information. For example, the GNSS original validity duration determined by the terminal device based on the information such as the speed of the terminal device may be at a level of 100 seconds, at a level of minutes, or at a level of hours. This is not limited in this embodiment of this application. For example, a larger movement speed of the terminal device may indicate a shorter GNSS original validity duration, that is, the GNSS original validity duration may be shorter as the speed of the terminal device increases.

### B. The GNSS first validity duration is validity duration updated based on the GNSS second validity duration.

The GNSS second validity duration (for example, represented by GNSS second validity duration #1) shown herein is different from GNSS second validity duration (for example, represented by GNSS second validity duration #2) in the following step 303, and the GNSS second validity duration #1 is shorter than the GNSS second validity duration #2. However, a method for determining the GNSS second validity duration #1 is the same as a method for determining the GNSS second validity duration #2. For example, the GNSS second validity duration #1 may be validity duration determined based on the validity duration of the TAC before the GNSS first validity duration is determined, and the GNSS second validity duration #2 is validity duration determined based on the validity duration of the TAC after the GNSS first validity duration is determined. For another example, the GNSS second validity duration #1 may be validity duration determined based on the GNSS original validity duration and the validity duration of the TAC, and the GNSS second validity duration #2 may be validity duration determined based on the GNSS second validity duration #1 and the validity duration of the TAC. For another example, the terminal device (or the network device) may update the GNSS second validity duration #1 to the GNSS first validity duration shown in step 301, and the terminal device (or the network device) may update the GNSS second validity duration #2 to the new GNSS first validity duration. In other words, when the GNSS first validity duration is the validity duration updated based on the GNSS second validity duration, the first communication apparatus and the second communication apparatus may further perform a step of updating the GNSS second validity duration to the new GNSS first validity duration.

Based on the foregoing descriptions of the GNSS first validity duration in two ways, a manner in which the first communication apparatus determines the GNSS first validity duration of the first communication apparatus may include: Manner 1: The first communication apparatus determines the GNSS original validity duration based on information such as a speed of the first communication apparatus. Manner 2: The first communication apparatus determines the GNSS first validity duration based on the GNSS original validity duration and the validity duration of the TAC. For example, the first communication apparatus may extend the GNSS original validity duration based on the GNSS original validity duration and the validity duration of the TAC. Manner 1 may correspond to the foregoing description A, and Manner 2 may correspond to the foregoing description B. A manner in which the second communication apparatus determines the GNSS first validity duration of the first communication apparatus may include: Manner 3: The second communication apparatus receives information that is reported by the first communication apparatus and that indicates the GNSS original validity duration, and obtains the GNSS original validity duration indicated by the information. Manner 4: The second communication apparatus determines the GNSS first validity duration based on the GNSS original validity duration and the validity duration of the TAC. For example, the first communication apparatus may extend the GNSS original validity duration based on the GNSS original validity duration and the validity duration of the TAC. Manner 3 may correspond to the foregoing description A, Manner 4 may correspond to the foregoing description B, Manner 3 corresponds to Manner 1, and Manner 4 corresponds to Manner 2.

302: The second communication apparatus sends a TAC within the GNSS first validity duration, and correspondingly, the first communication apparatus receives the TAC within the GNSS first validity duration.

Generally, the network device may detect an uplink timing error of the terminal device based on an uplink signal sent by the terminal device, and indicate, by using a closed-loop timing error, the terminal device to perform timing advance adjustment. The terminal device may ensure uplink synchronization by adjusting an uplink timing advance. The uplink timing advance adjustment may be calculated based on a location of the terminal device and a location of the network device, and the terminal device may further perform fine adjustment based on the closed-loop timing error indicated by the network device.

For example, if the uplink timing error detected by the network device is less than or equal to a threshold, the network device may send the TAC to the terminal device, so that the terminal device may determine the GNSS second validity duration based on the validity duration of the TAC. In other words, the terminal device may extend the GNSS validity duration based on the validity duration of the TAC.

303: The first communication apparatus determines the GNSS second validity duration, and the second communication apparatus determines the GNSS second validity duration. The GNSS second validity duration is determined based on the GNSS first validity duration and the validity duration of the TAC, and the GNSS second validity duration is longer than the GNSS first validity duration.

When receiving the TAC within the GNSS first validity duration, the first communication apparatus may determine the GNSS second validity duration based on the GNSS first validity duration and the validity duration of the TAC. If an uplink timing error detected by the second communication apparatus is less than or equal to a threshold, the second communication apparatus may send the TAC within the GNSS first validity duration, and determine the GNSS second validity duration based on the GNSS first validity duration and the validity duration of the TAC. For example, the second communication apparatus may first send the TAC within the GNSS first validity duration, and then determine the GNSS second validity duration; or the second communication apparatus may first determine the GNSS second validity duration, and then send the TAC within the GNSS first validity duration.

Usually, the timing advance adjustment indicated by the network device has specific validity duration. When the terminal device receives the TAC within the GNSS validity duration reported by the terminal device, it may be considered that a part of a location error (or referred to as an uplink timing error) of the terminal device is corrected by the TAC, and actual GNSS validity duration may be longer than the original GNSS validity duration previously reported by the terminal device. Therefore, extending the GNSS validity duration can not only ensure uplink synchronization of the terminal device, but also ensure that the terminal device can communicate with the network device for a long time. If the terminal device receives the TAC within the GNSS first validity duration, the terminal device may extend the GNSS validity duration to obtain the GNSS second validity duration. Alternatively, if the network device requires the terminal device to extend the GNSS validity duration, the network device may send the TAC within the GNSS first validity duration. A sequence of determining the GNSS second validity duration by the first communication apparatus and determining the GNSS second validity duration by the second communication apparatus is not limited in this embodiment of this application.

For example, the validity duration of the TAC may be configured by the network device by using RRC signaling, or may be configured by the network device by using media access control-control element (media access control-control element, MAC-CE) signaling. For example, before step 303, the network device sends RRC signaling that includes the validity duration of the TAC or MAC-CE signaling that includes the validity duration of the TAC. Correspondingly, the terminal device receives the RRC signaling or the MAC-CE signaling. For example, the validity duration of the TAC may be a value from 500 ms to 1024 mms, for example, 500 ms, 750 ms, 1200 ms, 1920 ms, 2560 ms, 5120 ms and 10240 ms. Details are not listed herein. Certainly, the validity duration of the TAC listed herein is merely an example, and should not be construed as a limitation on this embodiment of this application.

In this embodiment of this application, on the basis that the terminal device implements the uplink synchronization, communication duration of the terminal device can be increased (in other words, duration in which the terminal device is in a connected state is increased), so that the terminal device can implement long-time communication, and signaling overheads generated when the terminal device continuously enters and exits the connected state can be avoided, thereby reducing the signaling overheads and power consumption of the terminal device.

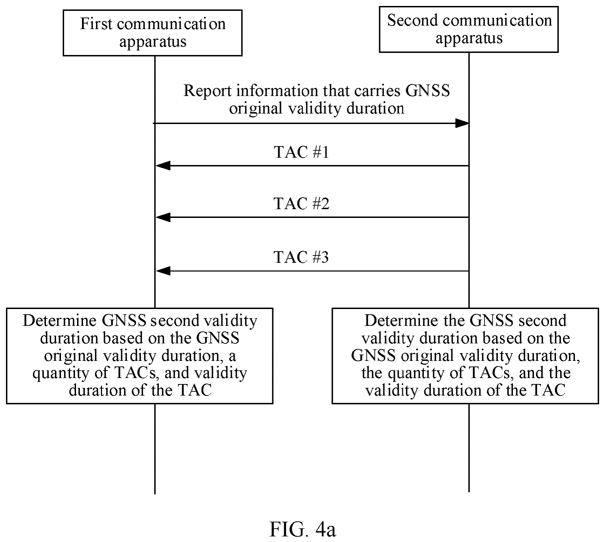

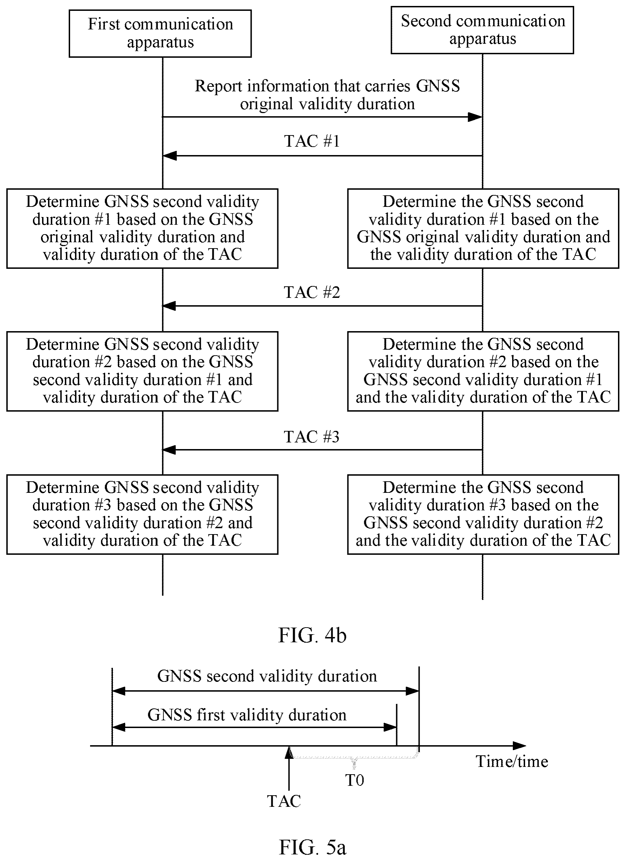

Based on the method shown in FIG. 3, an embodiment of this application provides two scenarios. FIG. 4a and FIG. 4b each are a diagram of a scenario of a satellite communication method according to an embodiment of this application.

As shown in FIG. 4a, a first communication apparatus reports information that carries GNSS original validity duration, and a second communication apparatus receives the information. Then, the second communication apparatus sequentially sends a TAC #1, a TAC #2, and a TAC #3. Correspondingly, the first communication apparatus sequentially receives the TAC #1, the TAC #2, and the TAC #3. For example, the second communication apparatus may send the TAC #1 within the GNSS original validity duration. For another example, the second communication apparatus may send the TAC #2 within validity duration of the TAC #1. For another example, the second communication apparatus may send the TAC #3 within validity duration of the TAC #2. For example, the first communication apparatus may receive the TAC #1 within the GNSS original validity duration. For another example, the first communication apparatus may receive the TAC #2 within validity duration of the TAC #1. For another example, the first communication apparatus may receive the TAC #3 within validity duration of the TAC #2. Both the first communication apparatus and the second communication apparatus may determine GNSS second validity duration based on the GNSS original validity duration, a quantity of TACs (for example, N=3), and validity duration of the TAC.

As shown in FIG. 4b, a first communication apparatus reports information that carries GNSS original validity duration, and the second communication apparatus receives the information. Then, the second communication apparatus sends a TAC #1 within the GNSS original validity duration. Correspondingly, the first communication apparatus receives the TAC #1 within the GNSS original validity duration. Both the first communication apparatus and the second communication apparatus may determine GNSS second validity duration #1 based on the GNSS original validity duration and validity duration of the TAC, and update the GNSS second validity duration #1 to new GNSS first validity duration #1. The second communication apparatus sends a TAC #2 within the new GNSS first validity duration #1. Correspondingly, the first communication apparatus receives the TAC #2 within the new GNSS first validity duration #1. Both the first communication apparatus and the second communication apparatus may determine GNSS second validity duration #2 based on the new GNSS first validity duration #1 and validity duration of the TAC, and update the GNSS second validity duration #2 to the new GNSS first validity duration #2. Related descriptions of the TAC #2 and GNSS second validity duration #3 are not described in detail.

When the GNSS first validity duration is validity duration updated based on the GNSS second validity duration, for example, for FIG. 4b, a relationship between the GNSS first validity duration and the GNSS second validity duration may be shown as follows:

In a first manner, an end moment of the GNSS second validity duration may be an end moment of the validity duration of the TAC. For example, the end moment of the TAC may be after an end moment of the GNSS first validity duration. As shown in FIG. 5a, the end moment of the GNSS second validity duration may be an end moment of T0. T0 in FIG. 5a to FIG. 5c represents the validity duration of the TAC. Details are not described below again. In this case, when the end moment of the TAC is earlier than or equal to the end moment of the GNSS first validity duration, the GNSS first validity duration may not be extended.

Based on the relationship between the GNSS first validity duration and the GNSS second validity duration shown in FIG. 5a, the GNSS second validity duration and the GNSS original validity duration may be understood as follows: If a terminal device receives one or more TACs within GNSS validity duration, and an end moment of validity duration of the last TAC is earlier than or equal to an end moment of the GNSS original validity duration, the end moment of the GNSS original validity duration is used as an end moment of the GNSS second validity duration. If an end moment of validity duration of the last TAC is later than an end moment of the GNSS original validity duration, the end moment of the GNSS second validity duration may be extended based on a quantity of TACs.

In this embodiment of this application, if the end moment of the TAC is after the end moment of the GNSS first validity duration, the GNSS first validity duration may be extended. This not only effectively increases communication duration of the terminal device, but also enables the terminal device to perform uplink timing advance adjustment based on the TAC, so that uplink synchronization within the validity duration of the TAC is more accurate. In this manner, both the communication duration of the terminal device and accuracy of the uplink synchronization of the terminal device can be considered.

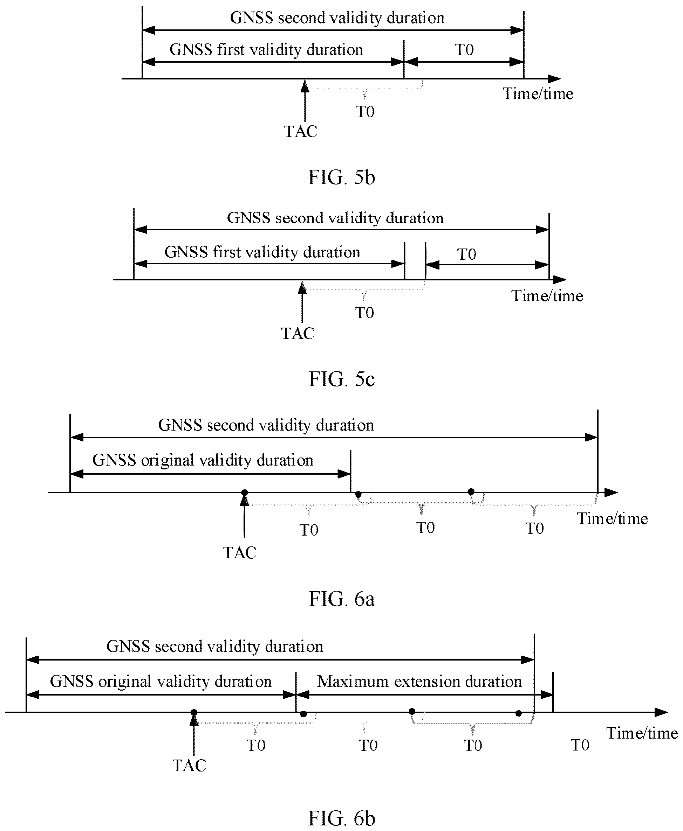

In a second manner, an end moment of the GNSS second validity duration may be determined based on an end moment of the GNSS first validity duration and the validity duration of the TAC. For example, an end moment of the TAC is after the end moment of the GNSS first validity duration. As shown in FIG. 5b, the GNSS second validity duration may be equal to a sum of the GNSS first validity duration and T0. In this case, provided that a terminal device receives the TAC within the GNSS first validity duration, the GNSS first validity duration may be extended by T0.

In this embodiment of this application, the end moment of the GNSS second validity duration is determined based on the end moment of the GNSS first validity duration and the validity duration of the TAC, so that communication duration of the terminal device can be further increased.

In a third manner, an end moment of the GNSS second validity duration may be determined based on an end moment of the validity duration of the TAC and the validity duration of the TAC. For example, the end moment of the TAC is after an end moment of the GNSS first validity duration. As shown in FIG. 5c, the GNSS second validity duration is longer than a sum of the GNSS first validity duration and T0. In other words, the end moment of the GNSS second validity duration may be a moment obtained by adding T0 to the validity duration of the TAC.

The relationship between the GNSS first validity duration and the GNSS second validity duration shown in FIG. 5a to FIG. 5c may be similarly applied to a relationship between the GNSS second validity duration and the GNSS original validity duration. For ease of description, the following uses the relationship shown in FIG. 5a and FIG. 5b as an example to describe the GNSS second validity duration and the GNSS original validity duration. N shown below is a positive integer, and a value of N is configured by the second communication apparatus, or is defined in a protocol. For example, N=1, N=2, or N=3. Values of N are not listed one by one. For FIG. 4a and FIG. 4b, N=3.

The relationship between the GNSS second validity duration and the GNSS original validity duration may be shown as follows:
In a fourth manner, a difference between the GNSS second validity duration and the GNSS original validity duration may be determined based on validity duration of N TACs. For example, the difference may be shorter than the validity duration of the N TACs, or the difference may be equal to the validity duration of the N TACs. N may be understood as a quantity of TACs actually sent by the network device.

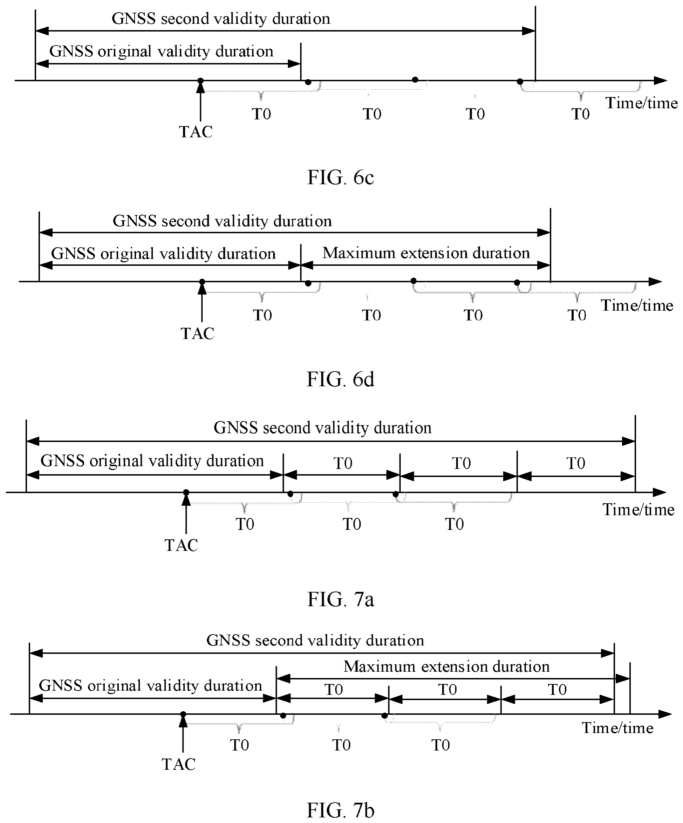

As shown in FIG. 6a, a difference between an end moment of the GNSS second validity duration and a start moment of validity duration of the 1^{st} TAC is equal to the validity duration of the N TACs, and a start moment of validity duration of the TAC is within the GNSS original validity duration. That is, a difference between the GNSS second validity duration and the GNSS original validity duration is shorter than the validity duration of the N TACs. For example, if the terminal device receives another TAC within validity duration of one TAC, the TAC still has specific validity duration. Therefore, GNSS validity duration may continue to postpone until validity duration of the next TAC ends. As shown in FIG. 7a, a difference between the GNSS second validity duration and the GNSS original validity duration is equal to validity duration of the N TACs.

In this embodiment of this application, the network device may configure a quantity of TACs based on an implementation. For example, the network device continuously sends TACs based on an uplink timing error. To be specific, the network device may continuously send the TACs provided that the uplink timing error is within an allowed range, so that the terminal device can extend the GNSS validity duration. In other words, the network device may configure the quantity of TACs within the GNSS validity duration based on the implementation, or the network device may determine, based on the implementation, whether to continue to send a TAC to extend the GNSS validity duration. Certainly, during specific implementation, the GNSS validity duration of the terminal device is not indefinitely extended. The GNSS validity duration is appropriately extended based on a closed-loop TAC, so that a quantity of times that the terminal device performs GNSS measurement can be effectively reduced, thereby reducing power consumption of the terminal device.

In a fifth manner, a difference between the GNSS second validity duration and the GNSS original validity duration may be determined based on validity duration of N TACs and maximum extension duration, and the maximum extension duration is a maximum value by which the GNSS validity duration can be extended.

As shown in FIG. 6b and FIG. 7b, when an end moment of the GNSS second validity duration determined based on the validity duration of the N TACs and the GNSS original validity duration is earlier than or equal to an end moment determined based on the GNSS original validity duration and the maximum extension duration, for related descriptions of the GNSS second validity duration, refer to FIG. 6a and FIG. 7a. Details are not described herein again.

When an end moment of the GNSS second validity duration determined based on the validity duration of the N TACs and the GNSS original validity duration is later than an end moment determined based on the GNSS original validity duration and the maximum extension duration, the end moment determined based on the GNSS original validity duration and the maximum extension duration is the end moment of the GNSS second validity duration. For a relationship shown in FIG. 6b (or understood as the relationship shown in FIG. 5a), when a timer (or maximum extension duration) is configured, a timing start moment of the timer (or a start moment of the maximum extension duration) is an end moment of the original GNSS validity duration reported by the terminal device, and the terminal device may extend the GNSS validity duration based on the TAC, where an end moment of the GNSS validity duration cannot exceed a timing end moment of the timer.

In this embodiment of this application, N may be understood as a quantity of TACs actually sent by the network device. The maximum extension duration may be defined in a protocol, or may be configured by the network device. For example, a timer may be configured in the terminal device, or a timer may be configured in the network device. Timing duration (or referred to as timing duration) of the timer is the maximum extension duration. The start moment of the maximum extension duration is the end moment of the GNSS original validity duration. Alternatively, a timing start moment of the timer is the end moment of the GNSS original validity duration, that is, an end moment of the GNSS validity duration reported by the terminal device. In an example, when the GNSS original validity duration ends, but before the timing duration of the timer ends (or before the maximum extension duration ends), the terminal device may continuously extend (or prolong) the GNSS validity duration in the manner shown in FIG. 6a or FIG. 7a. In another example, before the timing duration of the timer ends, or before the maximum extension duration ends, validity duration of the last TAC received by the terminal device already ends. In this case, FIG. 6b is used as an example, and the validity duration of the last TAC may be used as an end moment of the GNSS second validity duration. In still another example, when validity duration of the last TAC received by the terminal device does not end, but the timing duration of the timer ends or the maximum extension duration ends, the terminal device may use the timing end moment of the timer or an end moment of the maximum extension duration as the end moment of the GNSS second validity duration.

In this embodiment of this application, the extension duration of the GNSS validity duration is specified, so that the network device can determine, based on an actual communication scenario, duration that needs to be extended, and flexibility is higher.

In a sixth manner, a difference between the GNSS second validity duration and the GNSS original validity duration may be determined based on validity duration of N TACs and a maximum quantity (or referred to as a maximum quantity of TACs or the like), and the maximum quantity is a maximum quantity of TACs that are allowed to be sent by the network device. N may be understood as a quantity of TACs actually sent by the network device.

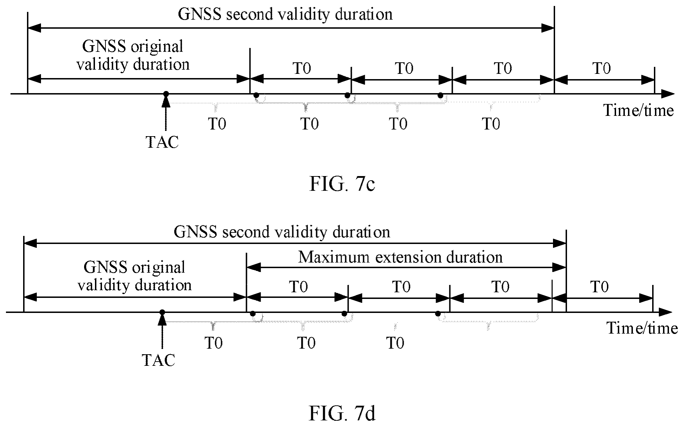

As shown in FIG. 6c and FIG. 7c, a maximum quantity is 3. Even if the terminal device receives four TACs, an end moment of the GNSS second validity duration is still determined based on validity duration of three TACs and the GNSS original validity duration. In other words, the 4^{th} TAC shown in FIG. 6c and FIG. 7c does not affect GNSS validity duration, and the end moment of the GNSS second validity duration is earlier than or equal to an end moment of validity duration of the 3^{rd} TAC. For a relationship shown in FIG. 6c (or understood as the relationship shown in FIG. 5a), a maximum quantity of TACs that can be extended is configured by the network device or specified in a protocol. If the terminal device receives a plurality of TACs, when a quantity of TACs reaches the maximum quantity of TACs, an end moment of validity duration of the last TAC of the plurality of TACs is used as an end moment of the GNSS second validity duration.

In this embodiment of this application, the maximum quantity may be defined in the protocol, or may be configured by the network device. In other words, when the maximum quantity of TACs is set, the terminal device may determine the GNSS second validity duration based on a quantity of TACs that affect the GNSS validity duration and validity duration of the TACs. The maximum quantity of TACs is specified, which can effectively ensure that the GNSS validity duration is not excessively extended.

In a seventh manner, a difference between the GNSS second validity duration and the GNSS original validity duration may be determined based on validity duration of N TACs, a maximum quantity, and maximum extension duration.

As shown in FIG. 6d and FIG. 7d, an end moment of the GNSS second validity duration may be an earliest end moment in the following three end moments: an end moment determined based on the validity duration of the N TACs, an end moment determined based on the validity duration of the N TACs and the maximum quantity, and an end moment determined based on the validity duration of the N TACs and the maximum extension duration. For specific descriptions of this embodiment of this application, refer to related descriptions of the fourth manner to the sixth manner. Details are not described herein again.

The first manner to the seventh manner are used for ease of distinguishing between different examples, and the foregoing sequence numbers should not be understood as a limitation on this embodiment of this application.

In a possible implementation, a value of the maximum quantity or the maximum extension duration may be further related to a capability of the terminal device. For example, the terminal device may report a capability of supporting the maximum extension duration by the terminal device, or report a capability of supporting the maximum quantity by the terminal device. The network device configures the maximum extension duration or the maximum quantity for the terminal device based on the capability reported by the terminal device. For example, a larger capability of the terminal device indicates larger maximum extension duration or a larger maximum quantity. Certainly, a relationship between a capability and a maximum quantity or a relationship between a capability and maximum extension duration may alternatively be defined in a protocol. For example, there may be a correspondence between the capability and the maximum quantity (for example, there is an index relationship between the capability and the maximum quantity). For another example, there may be a correspondence between the capability and the maximum extension duration. Therefore, the terminal device may determine the maximum quantity or the maximum extension duration based on the capability. Correspondingly, the network device may determine the maximum quantity or the maximum extension duration based on the capability reported by the terminal device.

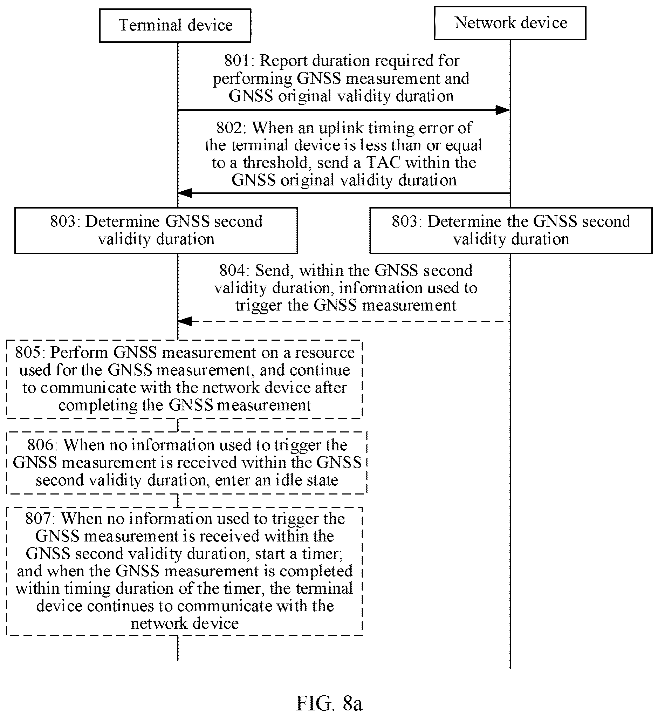

It should be noted that, when the terminal device receives, from the network device within the GNSS second validity duration, no information for triggering GNSS measurement, after the GNSS second validity duration ends, the terminal device may enter an idle state, or start a timer (where the timer shown herein is different from the timer used to timing the maximum extension duration), or the like. When the terminal device receives, from the network device within the GNSS second validity duration, information for triggering GNSS measurement, the terminal device may perform GNSS measurement within the GNSS second validity duration. For specific descriptions herein, refer to FIG. 8a.

With reference to FIG. 5a and FIG. 6b to FIG. 6d shown above, GNSS validity duration (that is, GNSS original validity duration) reported by the terminal device during original access is determined based on a UE speed obtained through one or more times of GNSS measurement in an idle state. However, when the terminal device is in a connected state, the network device may detect an uplink (uplink, UL) time error, and send a corresponding closed-loop TAC to the terminal device to perform TA adjustment. Because a TA error caused by mobility of the terminal device is partially corrected by the closed-loop TAC, compared with the GNSS validity duration reported by the terminal device, GNSS validity duration is extended. Therefore, to reduce power consumption caused by GNSS positioning, a conventional closed-loop TAC should also be considered in actual GNSS validity duration. FIG. 5a or FIG. 6a illustrates extension of the GNSS validity duration due to closed-loop TA error correction. When the terminal device receives a TAC before the reported GNSS validity duration ends, and corresponding TAC validity duration expires after the reported GNSS validity period ends, an actual end moment of the GNSS validity duration (that is, the GNSS second validity duration) is postponed to an end moment of the TAC validity duration. In addition, if the terminal device receives another TAC within validity duration of a previous TAC, an actual end moment of the GNSS validity duration is further extended to an end moment of validity duration of the next TAC. To ensure that an accumulated frequency error meets RAN4 requirements, maximum extension of GNSS validity duration should be limited. For example, the network device configures a timer for GNSS validity duration extension. Before the timer expires, the actual GNSS validity duration may be extended based on the closed-loop TAC. When the timer expires, even if a UE receives more TACs, the GNSS validity duration is not extended, as shown in FIG. 6b to FIG. 6d.

If the terminal device receives, before the GNSS validity duration expires, a MAC CE used for GNSS measurement, the terminal device performs GNSS measurement during a configured GNSS measurement gap (within timing duration of a timer shown in step 807 below). In addition, if the terminal device successfully completes GNSS measurement as described above, GNSS validity duration restarts from an end moment of the GNSS measurement gap. Then, when the closed-loop TAC is received, the GNSS validity duration is extended again from the reported validity duration.

It may be understood that the validity duration shown in embodiments of this application may also be referred to as a validity period, validity, or the like, and similar names are not listed one by one. Extending the GNSS validity duration may also be referred to as extension of the GNSS validity duration, or the like.

The following describes the method provided in embodiments of this application by using a first communication apparatus as a terminal device and a second communication apparatus as a network device. FIG. 8a is a schematic flowchart of a satellite communication method according to an embodiment of this application. As shown in FIG. 8a, the method includes the following steps.

801: A terminal device reports duration required by the terminal device to perform GNSS measurement and GNSS original validity duration.

For example, the duration required for performing GNSS measurement and the GNSS original validity duration may be carried in a same message, or may be carried in different messages.

For example, the terminal device may perform step 801 in a process of performing random access, or may perform step 801 after the terminal device enters a connected state.

802: When an uplink timing error of the terminal device is less than or equal to a threshold, a network device sends a TAC within the GNSS original validity duration. Correspondingly, the terminal device receives the TAC.

For specific descriptions of step 802, refer to step 302. Details are not described herein again.

803: The terminal device determines GNSS second validity duration, and the network device determines the GNSS second validity duration.

For specific descriptions of step 803, refer to step 303. Details are not described herein again.

For example, a quantity of times of performing step 802 and step 803 may be determined based on a quantity of TACs sent by the network device (for example, refer to FIG. 4a and FIG. 4b). For a relationship between the GNSS second validity duration and the GNSS original validity duration, refer to FIG. 5a to FIG. 5c, FIG. 6a to FIG. 6d, FIG. 7a to FIG. 7d, or the like. Details are not described herein again.

804: The network device sends, within the GNSS second validity duration, information for triggering the GNSS measurement. Correspondingly, the terminal device receives the information for triggering the GNSS measurement (or referred to as trigger information).

For example, the information for triggering the GNSS measurement may further carry a resource used for the GNSS measurement. The resource may include duration used for the GNSS measurement. The terminal device may receive, within the GNSS second validity duration, indication information for triggering the GNSS measurement and a resource allocated by the network device for the GNSS measurement.

805: The terminal device performs GNSS measurement on the resource used for the GNSS measurement, and continues to communicate with the network device after completing the GNSS measurement.

806: When the terminal device receives, within the GNSS second validity duration, no information for triggering the GNSS measurement, the terminal device enters an idle state.

For example, after entering the idle state, the terminal device may perform GNSS measurement in the idle state, and then re-initiate random access. It may be understood that step 806 and step 807 are parallel solutions. During specific implementation, the terminal device performs one of the steps. The solution shown in step 804 and step 805 and the solution shown in step 806 (or step 807) are parallel solutions.

807: When the terminal device receives, within the GNSS second validity duration, no information for triggering the GNSS measurement, the terminal device starts a timer. When the GNSS measurement is completed within timing duration of the timer, the terminal device continues to communicate with the network device, where start time (or referred to as a timing start moment) of the timer is an end moment of the GNSS second validity duration.

For example, the timing duration of the timer shown herein may be configured by the network device for the terminal device by using RRC signaling or MAC-CE signaling. For example, a start condition of the timer may be further configured. For example, the timer may be started at an end moment of the GNSS second validity duration. It may be understood that the timing duration and the timing duration shown in embodiments of this application may be replaced with each other, and a timing start moment and a timing start moment (or similar descriptions such as the start time) may also be replaced with each other.

In an example, the terminal device may communicate with the network device after timing duration of the timer ends. For example, the network device may schedule the terminal device to send an uplink signal after the timing duration of the timer ends, or the terminal device initiates an uplink sending request after the timing duration of the timer ends. In this manner, impact on communication between the terminal device and the network device can be avoided as much as possible when the terminal device performs GNSS measurement, thereby improving communication reliability.

In another example, the terminal device may communicate with the network device when the terminal device completes the GNSS measurement. Because the network device may not clearly learn of time at which the terminal device completes the GNSS measurement, the network device may continuously attempt to perform uplink scheduling on the terminal device before timing duration of the timer ends (where for example, if the network device receives an uplink signal sent by the terminal device, it may indicate that the terminal device has successfully completed the GNSS measurement), or the terminal device may initiate an uplink sending request after completing the GNSS measurement. In this manner, the terminal device can resume communication with the network device as early as possible.

For example, if the terminal device receives the trigger information of the GNSS measurement within the GNSS second validity duration, the terminal device may perform GNSS measurement based on the configured resource. If the terminal device receives no trigger information within the GNSS second validity duration, the terminal device starts the timer at the end moment of the GNSS second validity duration based on step 807, and autonomously performs GNSS measurement based on the timer. The terminal device is allowed to autonomously perform GNSS measurement when the GNSS second validity duration ends and no trigger information is received, so that a quantity of disconnections of the terminal device is effectively reduced.

In this embodiment of this application, because the terminal device can complete the GNSS measurement before the timing duration of the timer ends, the terminal device may continue to communicate with the network device.

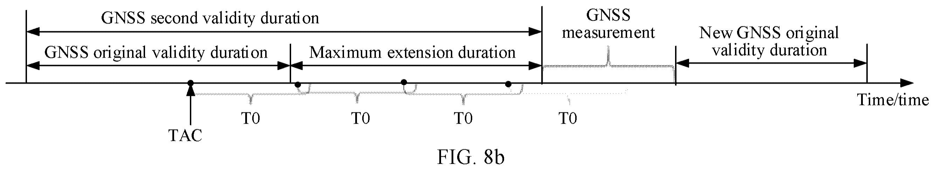

For example, that the terminal device continues to communicate with the network device may include: The terminal device sends an uplink signal to the network device. For example, the uplink signal may include GNSS original validity duration (where for example, the original validity duration is obtained based on the GNSS measurement shown in step 807). The GNSS original validity duration shown herein may be the same as or different from the GNSS original validity duration in step 801 (where when the two pieces of GNSS original validity duration are the same, the uplink signal may not include the GNSS original validity duration). The terminal device may indicate, by sending the GNSS original validity duration, that the terminal device completes the GNSS measurement. In an example, the terminal device may report the GNSS original validity duration in a differential manner. For example, the terminal device reports a difference between the GNSS original validity duration in step 807 and the GNSS original validity duration in step 801. For another example, the terminal device reports a difference between the GNSS original validity duration in step 807 and GNSS original validity duration that is reported last time. In another example, the terminal device may report the GNSS original validity duration in an index manner. For example, each GNSS original validity duration may correspond to one index, and the terminal device indicates corresponding GNSS original validity duration by reporting an index value. Generally, a start moment of new GNSS original validity duration reported by the terminal device may be an end moment of the GNSS second validity duration or an end moment of the timer. The relationship shown in FIG. 6b is used as an example. As shown in FIG. 8b, within timing duration of the timer, the terminal device may perform GNSS measurement. When completing the GNSS measurement, the terminal device may report new GNSS original validity duration. For example, a start moment of the new GNSS original validity duration is the end moment of the timer.

For example, if the terminal device does not complete the GNSS measurement within the timing duration of the timer, the terminal device enters the idle state.

In this embodiment of this application, on the basis that the terminal device implements uplink synchronization, communication duration of the terminal device can be increased (in other words, duration in which the terminal device is in the connected state is increased), so that the terminal device can implement long-time communication, and signaling overheads generated when the terminal device continuously enters and exits the connected state can be avoided, thereby reducing the signaling overheads. In addition, when the GNSS second validity duration ends and no trigger information is received, the terminal device may further autonomously start the timer to perform GNSS measurement. This can further reduce a quantity of disconnections of the terminal device, and further improve duration of communication between the terminal device and the network device.

In the foregoing embodiments, the terminal device and the network device may not determine the GNSS second validity duration, but determine extension duration of the GNSS validity duration. The extension duration may be duration extended relative to the GNSS first validity duration. For descriptions of the GNSS first validity duration, refer to the descriptions in two ways shown in FIG. 3. Details are not described herein again. For example, the extension duration may be equal to a difference between the GNSS second validity duration and the GNSS first validity duration. In other words, the terminal device and the network device may not perform a step of determining the GNSS second validity duration, but determine the extension duration of the GNSS validity duration based on the GNSS first validity duration. The extension duration is equal to the difference.

For specific descriptions of the extension duration, refer to the foregoing descriptions of the GNSS second validity duration and the GNSS first validity duration. A difference between the GNSS second validity duration and the GNSS first validity duration may be equal to the extension duration. Alternatively, for specific descriptions of the extension duration, refer to the foregoing descriptions of the GNSS second validity duration and the GNSS original validity duration. A difference between the GNSS second validity duration and the GNSS original validity duration may be equal to the extension duration. The following uses an example to describe a manner of determining the extension duration.

For example, for FIG. 5a, the terminal device may determine a difference between the end moment of the validity duration of the TAC and the end moment of the GNSS first validity duration, and the difference is the extension duration. For example, for FIG. 5b, the terminal device may determine the validity duration of the TAC, and the validity duration of the TAC is the extension duration. For example, for FIG. 5c, the terminal device may determine the extension duration based on the validity duration of the TAC and a difference between the end moment of the validity duration of the TAC and the end moment of the GNSS first validity duration. For example, for FIG. 6a, the terminal device may determine the extension duration based on the start moment of the validity duration of the TAC, the validity duration of the TAC, the quantity of TACs, and the end moment of the GNSS original validity duration. For specific descriptions of the extension duration, refer to the descriptions of the GNSS second validity duration, the GNSS first validity duration, the GNSS original validity duration, and the like in the foregoing embodiments. Details are not described herein again.

An embodiment of this application further provides a satellite communication method. A terminal device determines GNSS third validity duration, where the GNSS third validity duration is longer than GNSS original validity duration. The terminal device reports the GNSS third validity duration. Correspondingly, a network device receives the GNSS third validity duration. The terminal device communicates with the network device within the GNSS third validity duration. For example, the terminal device may receive a TAC within the GNSS third validity duration, and perform uplink timing advance adjustment based on the TAC. Optionally, after the GNSS third validity duration ends, the terminal device may enter an idle state. Alternatively, based on the GNSS third validity duration, the terminal device and the network device may communicate with each other based on the steps shown in 804 to 807. In an example, the GNSS third validity duration may be determined based on the GNSS original validity duration and communication duration required (or predicted or expected) by the terminal device. In another example, the GNSS third validity duration may be determined based on the GNSS original validity duration and a capability of the terminal device. For example, a larger capability of the terminal device indicates larger GNSS third validity duration.

For example, a manner in which the terminal device reports the GNSS third validity duration includes: The terminal device may send information for carrying the GNSS third validity duration; or the terminal device may report the GNSS third validity duration in a differential manner. For example, the terminal device may send a difference between the GNSS third validity duration and the GNSS original validity duration.

For example, the terminal device may periodically report the GNSS third validity duration. For example, a specific value of the GNSS third validity duration may vary with implementation. For example, the terminal device may alternatively report the GNSS third validity duration at any time.

In this embodiment of this application, the terminal device extends the GNSS original validity duration and reports GNSS original validity duration after the extension to the network device, so that duration of communication between the terminal device and the network device can be effectively increased.

The following describes a communication apparatus provided in embodiments of this application.

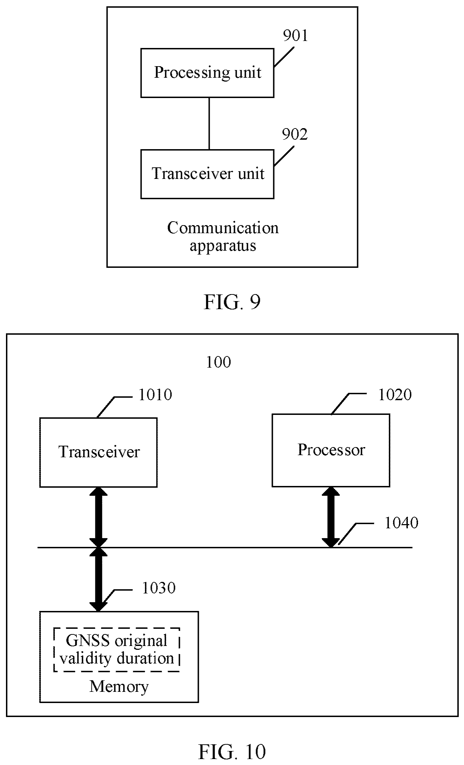

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical function division. During actual implementation, another division manner may be used. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902. The transceiver unit 902 may implement a corresponding communication function, and the processing unit 901 is configured to process data. For example, the transceiver unit 902 may also be referred to as an interface, a communication interface, or a communication unit.

In some embodiments of this application, the communication apparatus may be configured to perform an action performed by the terminal device in the foregoing method embodiments. In this case, the communication apparatus may be the terminal device or a component (for example, a chip or a system) that can be configured for the terminal device. The transceiver unit 902 is configured to perform a receiving and sending related operation of the terminal device in the foregoing method embodiments. The processing unit 901 is configured to perform a processing related operation of the terminal device in the foregoing method embodiments. The communication apparatus may be configured to perform steps, functions, or the like performed by the terminal device in the foregoing method embodiments.

For example, the processing unit 901 is configured to determine GNSS first validity duration.

The transceiver unit 902 is configured to receive a TAC from a network device within the GNSS first validity duration; or the transceiver unit 902 is configured to input a TAC to the processing unit 901 within the GNSS first validity duration.

The processing unit 901 is further configured to determine GNSS second validity duration.

For example, the processing unit 901 is further configured to update the GNSS second validity duration to the new GNSS first validity duration.

For example, the processing unit 901 is further configured to: when no information for triggering GNSS measurement is received within the GNSS second validity duration, control the communication apparatus to enter an idle state; or when no information for triggering GNSS measurement is received within the GNSS second validity duration, start a timer, and when the GNSS measurement is completed within timing duration of the timer, continue communication by using the transceiver unit 902.

Specific descriptions of the transceiver unit and the processing unit shown in this embodiment of this application are merely examples. For specific functions, steps, or the like of the transceiver unit and the processing unit, refer to the foregoing method embodiments (as shown in FIG. 3, FIG. 4a, FIG. 4b, and FIG. 8a). Details are not described herein again.

Optionally, the communication apparatus may further include a storage unit. The storage unit may be configured to store instructions and/or data. The processing unit 901 may read the instructions and/or the data in the storage unit, so that the communication apparatus implements the foregoing method embodiments. For example, the storage unit may be configured to store GNSS original validity duration, a maximum quantity, or maximum extension duration.

FIG. 9 is reused. In some other embodiments of this application, the communication apparatus may be configured to perform an action performed by the network device in the foregoing method embodiments. In this case, the communication apparatus may be the network device or a component that can be configured for the network device. The transceiver unit 902 is configured to perform a receiving and sending related operation of the network device in the foregoing method embodiments. The processing unit 901 is configured to perform a processing related operation of the network device in the foregoing method embodiments. The communication apparatus may be configured to perform steps, functions, or the like performed by the network device in the foregoing method embodiments.

For example, the processing unit 901 is configured to determine GNSS first validity duration.

The transceiver unit 902 is configured to send a TAC within the GNSS first validity duration; or the transceiver unit 902 is configured to output a TAC within the GNSS first validity duration.

The processing unit 901 is further configured to determine GNSS second validity duration.

For example, the processing unit 901 is further configured to update the GNSS second validity duration to the new GNSS first validity duration.

In this embodiment of this application, for descriptions of the GNSS first validity duration, the GNSS second validity duration, validity duration of the TAC, GNSS original validity duration, and the like, refer to the descriptions in the foregoing method embodiments (including FIG. 3, FIG. 4a, FIG. 4b, FIG. 5a to FIG. 5c, FIG. 6a to FIG. 6d, FIG. 7a to FIG. 7d, FIG. 8a, and FIG. 8b). Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein again.

The foregoing describes the communication apparatus in embodiments of this application. The following describes possible product forms of the communication apparatus. It should be understood that any form of product that has a function of the communication apparatus in FIG. 9 falls within the protection scope of embodiments of this application. It should be further understood that the following descriptions are merely examples, and do not limit the product form of the communication apparatus in embodiments of this application.

In a possible implementation, in the communication apparatus shown in FIG. 9, the processing unit 901 may be one or more processors. The transceiver unit 902 may be a transceiver. Alternatively, the transceiver unit 902 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

As shown in FIG. 10, a communication apparatus 100 includes one or more processors 1020 and a transceiver 1010.

For example, when the communication apparatus is configured to perform the steps, the methods, or the functions performed by the first communication apparatus or the terminal device, the processor 1020 is configured to determine GNSS first validity duration; the transceiver 1010 is configured to receive a TAC from a network device within the GNSS first validity duration; and the processor 1020 is further configured to determine GNSS second validity duration.

For example, the processor 1020 is further configured to update the GNSS second validity duration to the new GNSS first validity duration.

For example, the processor 1020 is further configured to: when no information for triggering GNSS measurement is received within the GNSS second validity duration, control the communication apparatus to enter an idle state; or when no information for triggering GNSS measurement is received within the GNSS second validity duration, start a timer, and when the GNSS measurement is completed within timing duration of the timer, continue to communication with the network device by using the transceiver 1010.

For example, when the communication apparatus is configured to perform the steps, the methods, or the functions performed by the second communication apparatus or the network device, for example, the processor 1020 is configured to determine GNSS first validity duration; the transceiver 1010 is configured to send a TAC within the GNSS first validity duration; and the processor 1020 is further configured to determine GNSS second validity duration.

For example, the processor 1020 is further configured to update the GNSS second validity duration to the new GNSS first validity duration.

In this embodiment of this application, for descriptions of the GNSS first validity duration, the GNSS second validity duration, validity duration of the TAC, GNSS original validity duration, and the like, refer to the descriptions in the foregoing method embodiments (including FIG. 3, FIG. 4a, FIG. 4b, FIG. 5a to FIG. 5c, FIG. 6a to FIG. 6d, FIG. 7a to FIG. 7d, FIG. 8a, and FIG. 8b). Details are not described herein again. It may be understood that for specific descriptions of the processor and the transceiver, refer to descriptions of the processing unit and the transceiver unit shown in FIG. 9. Details are not described herein again.

In various implementations of the communication apparatus shown in FIG. 10, the transceiver may include a receiver and a transmitter. The receiver is configured to perform a receiving function (or operation) and the transmitter is configured to perform a transmitting function (or operation). In addition, the transceiver is configured to communicate with another device/apparatus through a transmission medium.

Optionally, the communication apparatus 100 may further include one or more memories 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor. In this embodiment of this application, the memory 1030 may store GNSS original validity duration, a maximum quantity, maximum extension duration, or the like. For example, the memory shown in FIG. 10 shows only the GNSS validity duration as an example.

A specific connection medium between the transceiver 1010, the processor 1020, and the memory 1030 is not limited in this embodiment of this application. In this embodiment of this application, the memory 1030, the processor 1020, and the transceiver 1010 are connected through a bus 1040 in FIG. 10. The bus is represented by a bold line in FIG. 10. A manner of a connection between other components is merely an example for description, and is not limited. The bus may be classified into an address bus, a data bus, a control bus, and the like. For ease of representation, only one bold line is used to represent the bus in FIG. 10, but this does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in this embodiment of this application may alternatively be a circuit or any other apparatus that can implement a storage function, and is configured to store the program instructions and/or the data.

The processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent in a wireless manner, the processor 1020 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those shown in FIG. 10. This is not limited in this embodiment of this application. The methods performed by the processor and the transceiver and shown above are merely examples. For specific steps performed by the processor and the transceiver, refer to the methods described above.

For example, an embodiment of this application further provides a network device. The network device may include an active antenna unit (active antenna unit, AAU) and a baseband processing unit (building base band unit, BBU). The BBU may be a component of a distributed base station, and mainly completes baseband processing (for example, channel coding, channel demodulation, and modulation and demodulation) of a signal, providing transmission management and an interface, managing a wireless resource, providing a clock signal, and other functions.

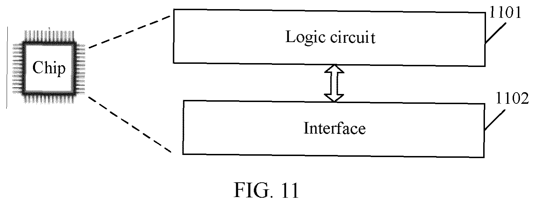

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the communication apparatus is a chip. The chip includes the logic circuit 1101 and the interface 1102.

In this embodiment of this application, the logic circuit and the interface may be coupled to each other. A specific manner of connection between the logical circuit and the interface is not limited in this embodiment of this application.

For example, when the communication apparatus is configured to perform the method, the function, or the step performed by the first communication apparatus or the terminal device, the logic circuit 1101 is configured to determine GNSS first validity duration; the interface 1102 is configured to input a TAC to the logic circuit 1101 within the GNSS first validity duration; and the logic circuit 1101 is further configured to determine GNSS second validity duration.

For example, the logic circuit 1101 is further configured to update the GNSS second validity duration to the new GNSS first validity duration.

For example, the logic circuit 1101 is further configured to: when no information for triggering GNSS measurement is received within the GNSS second validity duration, control the communication apparatus to enter an idle state; or when no information for triggering GNSS measurement is received within the GNSS second validity duration, start a timer, and when GNSS measurement is completed within timing duration of the timer, continue communication by using the interface 1102.

For example, when the communication apparatus is configured to perform the method, the function, or the step performed by the second communication apparatus or the network device, for example, the logic circuit 1101 is configured to determine GNSS first validity duration; the interface 1102 is configured to output a TAC within the GNSS first validity duration; and the logic circuit 1101 is further configured to determine GNSS second validity duration.

For example, the logic circuit 1101 is further configured to update the GNSS second validity duration to the new GNSS first validity duration.

For example, the chip shown in FIG. 11 may further include a memory. The memory may be configured to store GNSS original validity duration, a maximum quantity, maximum extension duration, and the like.

It may be understood that the communication apparatus shown in this embodiment of this application may implement the methods provided in embodiments of this application in a form of hardware, or may implement the methods provided in embodiments of this application in a form of software. This is not limited in this embodiment of this application.

In this embodiment of this application, for descriptions of the GNSS first validity duration, the GNSS second validity duration, validity duration of the TAC, the GNSS original validity duration, and the like, refer to the descriptions in the foregoing method embodiments (including FIG. 3, FIG. 4a, FIG. 4b, FIG. 5a to FIG. 5c, FIG. 6a to FIG. 6d, FIG. 7a to FIG. 7d, FIG. 8a, and FIG. 8b). Details are not described herein again.

For specific implementations of embodiments shown in FIG. 11, further refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, a network device, or the like) to perform all or some of the steps of the methods in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method is applied to a first communication apparatus, and the method comprises:
determining global navigation satellite system GNSS first validity duration of the first communication apparatus;
receiving, from a second communication apparatus within the GNSS first validity duration, signaling for determining GNSS second validity duration; and
determining the GNSS second validity duration, wherein the GNSS second validity duration is determined based on the GNSS first validity duration and validity duration of a timing advance command TAC, and the GNSS second validity duration is longer than the GNSS first validity duration.

2. A satellite communication method, wherein the method is applied to a second communication apparatus, and the method comprises:
determining global navigation satellite system GNSS first validity duration of a first communication apparatus;
sending, to the first communication apparatus within the GNSS first validity duration, signaling for determining GNSS second validity duration; and
determining the GNSS second validity duration, wherein the GNSS second validity duration is determined based on the GNSS first validity duration and validity duration of a TAC, and the GNSS second validity duration is longer than the GNSS first validity duration.

3. A satellite communication method, wherein the method is applied to a first communication apparatus, and the method comprises:
determining global navigation satellite system GNSS first validity duration of the first communication apparatus;
receiving, from a second communication apparatus within the GNSS first validity duration, signaling for determining extension duration; and
determining the extension duration, wherein the extension duration is duration extended relative to the GNSS first validity duration.

4. A satellite communication method, wherein the method is applied to a second communication apparatus, and the method comprises:
determining global navigation satellite system GNSS first validity duration of a first communication apparatus;
sending, to the first communication apparatus within the GNSS first validity duration, signaling for determining extension duration; and
determining the extension duration, wherein the extension duration is duration extended relative to the GNSS first validity duration.

5. The method according to claim 3 or 4, wherein a difference between the GNSS first validity duration and GNSS second validity duration is equal to the extension duration, and the GNSS second validity duration is determined based on the GNSS first validity duration and validity duration of a TAC.

6. A satellite communication method, wherein the method is applied to a first communication apparatus, and the method comprises:
determining global navigation satellite system GNSS first validity duration of the first communication apparatus;
receiving a timing advance command TAC from a second communication apparatus within the GNSS first validity duration; and
determining GNSS second validity duration, wherein the GNSS second validity duration is determined based on the GNSS first validity duration and validity duration of the TAC, and the GNSS second validity duration is longer than the GNSS first validity duration.

7. A satellite communication method, wherein the method is applied to a second communication apparatus, and the method comprises:
determining global navigation satellite system GNSS first validity duration of a first communication apparatus;
sending a timing advance command TAC to the first communication apparatus within the GNSS first validity duration; and
determining GNSS second validity duration, wherein the GNSS second validity duration is determined based on the GNSS first validity duration and validity duration of the TAC, and the GNSS second validity duration is longer than the GNSS first validity duration.

8. The method according to any one of claims 1 to 7, wherein an end moment of the validity duration of the TAC is later than an end moment of the GNSS first validity duration.

9. The method according to any one of claims 1 to 8, wherein the GNSS first validity duration is GNSS original validity duration, or the GNSS first validity duration is validity duration updated based on the GNSS second validity duration.

10. The method according to claim 9, wherein when the GNSS first validity duration is the validity duration updated based on the GNSS second validity duration, a difference between the GNSS second validity duration and the GNSS first validity duration is determined based on validity duration of one TAC, and the method further comprises:
updating the GNSS second validity duration to the new GNSS first validity duration.

11. The method according to claim 9 or 10, wherein a difference between the GNSS second validity duration and the GNSS original validity duration is determined based on validity duration of N TACs, and N is a positive integer.

12. The method according to claim 11, wherein that the difference between the GNSS second validity duration and the GNSS original validity duration is determined based on the validity duration of the N TACs comprises:
the difference between the GNSS second validity duration and the GNSS original validity duration is shorter than the validity duration of the N TACs; or
the difference between the GNSS second validity duration and the GNSS original validity duration is equal to the validity duration of the N TACs.

13. The method according to claim 1, 3, or 6, wherein the method further comprises:
entering an idle state when no information for triggering GNSS measurement is received from the second communication apparatus within the GNSS second validity duration; or
starting a timer when no information for triggering GNSS measurement is received from the second communication apparatus within the GNSS second validity duration, and continuing to communicate with the second communication apparatus when the GNSS measurement is completed within timing duration of the timer, wherein start time of the timer is an end moment of the GNSS second validity duration.

14. A first communication apparatus, wherein the apparatus comprises:
a processing unit, configured to determine global navigation satellite system GNSS first validity duration of the first communication apparatus; and
a transceiver unit, configured to receive, from a second communication apparatus within the GNSS first validity duration, signaling for determining GNSS second validity duration, wherein
the processing unit is further configured to determine the GNSS second validity duration, wherein the GNSS second validity duration is determined based on the GNSS first validity duration and validity duration of a TAC, and the GNSS second validity duration is longer than the GNSS first validity duration.

15. A second communication apparatus, wherein the apparatus comprises:
a processing unit, configured to determine global navigation satellite system GNSS first validity duration of a first communication apparatus; and
a transceiver unit, configured to send, to the first communication apparatus within the GNSS first validity duration, signaling for determining GNSS second validity duration, wherein
the processing unit is further configured to determine the GNSS second validity duration, wherein the GNSS second validity duration is determined based on the GNSS first validity duration and validity duration of a TAC, and the GNSS second validity duration is longer than the GNSS first validity duration.

16. A first communication apparatus, wherein the apparatus comprises:
a processing unit, configured to determine global navigation satellite system GNSS first validity duration of the first communication apparatus; and
a transceiver unit, configured to receive, from a second communication apparatus within the GNSS first validity duration, signaling for determining extension duration, wherein
the processing unit is further configured to determine the extension duration, wherein the extension duration is duration extended relative to the GNSS first validity duration.

17. A second communication apparatus, wherein the apparatus comprises:
a processing unit, configured to determine global navigation satellite system GNSS first validity duration of a first communication apparatus; and
a transceiver unit, configured to send, to the first communication apparatus within the GNSS first validity duration, signaling for determining extension duration, wherein
the processing unit is further configured to determine the extension duration, wherein the extension duration is duration extended relative to the GNSS first validity duration.

18. The apparatus according to claim 16 or 17, wherein a difference between the GNSS first validity duration and GNSS second validity duration is equal to the extension duration, and the GNSS second validity duration is determined based on the GNSS first validity duration and validity duration of a TAC.

19. A first communication apparatus, wherein the apparatus comprises:
a processing unit, configured to determine global navigation satellite system GNSS first validity duration of the first communication apparatus; and
a transceiver unit, configured to receive a timing advance command TAC from a second communication apparatus within the GNSS first validity duration, wherein
the processing unit is further configured to determine GNSS second validity duration, wherein the GNSS second validity duration is determined based on the GNSS first validity duration and validity duration of the TAC, and the GNSS second validity duration is longer than the GNSS first validity duration.

20. A second communication apparatus, wherein the apparatus comprises:
a processing unit, configured to determine global navigation satellite system GNSS first validity duration of a first communication apparatus; and
a transceiver unit, configured to send a timing advance command TAC to the first communication apparatus within the GNSS first validity duration, wherein
the processing unit is further configured to determine GNSS second validity duration, wherein the GNSS second validity duration is determined based on the GNSS first validity duration and validity duration of the TAC, and the GNSS second validity duration is longer than the GNSS first validity duration.

21. The apparatus according to any one of claims 14 to 20, wherein an end moment of the validity duration of the TAC is later than an end moment of the GNSS first validity duration.

22. The apparatus according to any one of claims 14 to 21, wherein the GNSS first validity duration is GNSS original validity duration, or the GNSS first validity duration is validity duration updated based on the GNSS second validity duration.

23. The apparatus according to claim 22, wherein when the GNSS first validity duration is the validity duration updated based on the GNSS second validity duration, a difference between the GNSS second validity duration and the GNSS first validity duration is determined based on validity duration of one TAC, and the processing unit is further configured to update the GNSS second validity duration to the new GNSS first validity duration.

24. The apparatus according to claim 22 or 23, wherein a difference between the GNSS second validity duration and the GNSS original validity duration is determined based on validity duration of N TACs, and N is a positive integer.

25. The apparatus according to claim 24, wherein that the difference between the GNSS second validity duration and the GNSS original validity duration is determined based on the validity duration of the N TACs comprises:
the difference between the GNSS second validity duration and the GNSS original validity duration is shorter than the validity duration of the N TACs; or
the difference between the GNSS second validity duration and the GNSS original validity duration is equal to the validity duration of the N TACs.

26. The apparatus according to claim 14, 16, or 19, wherein
the processing unit is further configured to: enter an idle state when no information for triggering GNSS measurement is received from the second communication apparatus within the GNSS second validity duration; or
the processing unit is further configured to: start a timer when no information for triggering GNSS measurement is received from the second communication apparatus within the GNSS second validity duration, and continue to communicate with the second communication apparatus when the GNSS measurement is completed within timing duration of the timer, wherein start time of the timer is an end moment of the GNSS second validity duration.

27. A communication apparatus, comprising a processor and a memory, wherein
the memory is configured to store instructions; and
the processor is configured to execute the instructions, to enable the method according to any one of claims 1 to 13 to be performed.

28. The communication apparatus according to claim 27, wherein the communication apparatus is a chip.

29. A communication apparatus, comprising a logic circuit and an interface, wherein the logic circuit is coupled to the interface; and
the interface is configured to input and/or output information, and the logic circuit is configured to perform the method according to any one of claims 1 to 13.

30. A computer-readable storage medium, wherein the computer-readable storage medium is configured to store a computer program, and when the computer program is executed, the method according to any one of claims 1 to 13 is performed.

31. A computer program, wherein when the computer program is executed, the method according to any one of claims 1 to 13 is performed.

32. A communication system, comprising a first communication apparatus and a second communication apparatus, wherein the first communication apparatus is configured to perform the method according to any one of claims 1, 3, 4, and 6 to 13, and the second communication apparatus is configured to perform the method according to any one of claims 2, 4, 5, and 7 to 12.
